# EUROPEAN PATENT APPLICATION

(11) **EP 2 749 244 A1**
(43) Date of publication of application: **02.07.2014**
(21) Application number: 11872548.0
(22) Date of filing: 22.09.2011
(51) Int. Cl.: A61C 8/00

(54) **SELF-CUTTING DENTAL IMPLANT**

(71) Applicant: Aviño Bolinches, Juan Manuel, 46005 Valencia (ES)
(72) Inventor: Aviño Bolinches, Juan Manuel, 46005 Valencia (ES)
(74) Representative: Ungria López, Javier
(86) International application number: PCT/ES2011/000291
(87) International publication number: WO 2013/041734

(57) **Abstract**

The invention relates to a self-cutting dental implant consisting of an integral body which includes a threaded section (3) having a thread (6) that occupies approximately 25% of the portion that penetrates into the bone, a cutting section (4) consisting of a single helical cutter (8) that occupies 75% of said part that is inserted into the bone, optionally comprising a coupling section (2), consisting of a pillar (5) having a length that is equal to 25% of the total length L of the implant body. The thread (6) of the threaded section (3) has a worm with three pronounced spires (7), and the helical cutter (8) of the cutting section (4) has three blades (9) that define three curved cutting edges on the tip thereof (10).

## Description

### OBJECT OF THE INVENTION

The invention, as expressed in the heading of the present descriptive specification, refers to a self-cutting dental implant, which presents several advantages and novel characteristics, which will be described in detail hereinafter and which constitute an improvement on the state of the art with respect to systems with the same purpose currently found on the market.

More specifically, the object of the invention is a dental implant, of the variety inserted into jaw bones to serve as a support for an artificial dental piece. Said implant is of the self-cutting variety, as it comprises a cutting portion in addition to a threaded section and another coupling section, thus avoiding the need for prior drilling of the bone in order to fix it, and with the distinctive feature that it includes a structural design wherein the configuration and proportions of said cutting portion and said threaded portion have been specifically studied in order to notably improve both the effectiveness of the implant and the speed and simplicity with which the implant is placed.

### APPLICATION FIELD OF THE INVENTION

The application field of the present invention falls within the technical sector of odontology, focusing in particular on the manufacture of dental implants.

### BACKGROUND ART

Nowadays the most common way to replace a dental piece tends to be replacement of said dental piece with a dental implant, which consists of a sort of screw which is fixed to the jaw bones, the dental piece in question being fixed to the upper portion thereof, as is known.

Placing and fixing a conventional implant in the jaw bones presents a series of drawbacks, among them the fact that is necessary to previously drill a hole for the implant so that, once the suitable hole has been made screw the implant into the hole, stands out. This made necessary to let a certain amount of time pass in order to heal enough for the new dental piece to be placed, during which time some kind of temporary prosthesis would have to be placed.

Furthermore, any deviation of the hole drilled could not be corrected when placing the implant, which made more difficult the placement of the piece upon requiring additional techniques to be used in order to correct said deviation.

In order to overcome said limitations, in the state of the art a new type of dental implant is known referred to as self-cutting dental implants, such as those described in Spanish Patent no. 200902041, property of the same applicant. In addition to the coupling on the external portion of the implant, which serves to attach the artificial dental piece, said implants also have a lower section made up of one or more drills on the portion of the same inserted into the bone and another upper threaded section for fixing the implant in place.

In this regard, although they satisfactorily meet the objective of improving the fixation of implants and making easier said operation in order to make it faster and simpler avoiding the drawback of requiring a previous drill in the bone, said implants nevertheless have certain aspects that can be improved. This is the main object of the present invention, through which a structural design of the implant has been developed, wherein said cutting part and said threaded part have a specific and designated configuration that is able to markedly improve the fixation of the same to the jaw bone, as well as speed up and simplify the process of placing the same.

### DESCRIPTION OF THE INVENTION

Thus, the self-cutting dental implant proposed by the present invention stands out as highly novel within its application field, given that in light of its implementation and in a non-limiting manner, the aforementioned objectives are satisfactorily met. The distinguishing features which make this possible and which distinguish it from that already known on the market, have been duly included in the claims attached at the end of the present descriptive specification.

In concrete terms, what the invention proposes is a self-cutting dental implant that, made in the conventional manner from an integral metal or ceramic body, comprising an upper section for coupling the prosthesis, a middle threaded section and a lower cutting section, comprises the following unique innovations that improve its efficacy:
- The upper coupling section is constituted by a pillar of considerable size, taking up approximately 25% of the total length of the body of the implant, enables, after said implant has been inserted into the bone via the flapless, transmucosal technique, measures to be taken immediately in order to prepare the crown or artificial dental piece, without requiring the use of additional pieces which usually come at a high cost, such as prosthetic pillars, pillar screws, impression transfers, healing pillars, sealing screws, etc. Nevertheless, said pillar may be left out and be substituted by any other type of internal or external connection that allows a pillar or prosthetic structure to be screwed into the rest of the implant, as is the case in conventional implants.
- The middle threaded section takes up approximately 15% of the total length of the implant body, if the upper coupling section is taken into account, or 25% with respect to the portion that penetrates the bone alone. Said section includes a thread, the worm of which forms three pronounced spires, which are strongly self-threaded and offer the primary stability required. This section is inserted into the bone at low speed and with high torque.
- Last and most important, the lower cutting section is constituted by a single helical drill which takes up 60% of the total piece which constitutes the implant if the upper coupling section is taken into account and 75% with respect to the portion of the implant that is inserted into the bone alone, facilitating the subsequent insertion of the remaining 25% formed by the self-threaded section. To this end, said drill is of the sort that has three cutting blades which begin at the tip of said cutter, such that, applying very little pressure to the implant while being placed, said blades provide a great insertion capacity of the same into the jaw bone. This section of the implant is inserted at high speed and with low torque.

Furthermore, the tip of said drill ends in three small curved cutting blades constituting the end of the edges of the drill which allow not only the easy insertion of the implant by the cutter portion when inserted at high speed and with low torque but also, when reaching its threaded section and the implant begins to be inserted at low speed and high torque, the drill can be inserted by itself into the bone without the need to apply pressure.

Thus, the cutting section is inserted into the bone at high speed (2,000-1,500 rpm) and once the whole cutter is inside the bone, and the threaded section begins to penetrate, the bone's resistance to the insertion increases in the area of said section, owing to the configuration of its worm which forms the three spires, such that the implant is only inserted by means of the kinetic energy of the lower spire. At this moment the speed with which the implant is placed must be lowered and the torque must be increased in order to insert the implant's apical section without a too high pressure, i.e. the two remaining spires of the self-threaded section, as it is possible to modify the direction and depth of placement thanks to the especially sharp nature of the tip of the drill.

In other similar implants, the tip of the cutting section ends in a blunt central edge, meaning that a large amount of pressure must be applied to the implant when inserting it, leading to a high risk of losing control and inserting it too far. Furthermore, in other similar implants, the cutting section makes up only a small percentage of the overall length that is inserted into the bone, whereas in the implant proposed herein, said section makes up 75% of said total, which facilitates its insertion greatly.

Thus, the advantages of the new self-cutting implant proposed herein are the speed and simplicity with which it is placed, as well as significant cost reduction, since there is no need for prior drilling of the bone or prosthetic attachments such as implant pillars, as this is already incorporated. Another advantage of its design is that there is no bone loss during its insertion into the bone, which is compressed between the edges of the cutting section, thus facilitating osteo-integration.

In light of the foregoing, the described self-cutting dental implant is found to be an innovative structure with structural and constituent features heretofore unknown for this purpose, reasons which, together with its practical utility, provide sufficient grounds for it to be granted the privilege of exclusivity sought herein.

### DESCRIPTION OF THE DRAWINGS

In order to complete the current description of the implant, object of the invention, and to facilitate a better understanding of its distinguishing features, a set of drawings is attached to the present specification as an integral part of the same, which contains the following illustrative, non-limiting representations:
Figure number 1.- Shows an elevation view of an embodiment of the self-cutting dental implant, object of the invention, wherein the portions and elements comprised by the implant can be observed, along with the configuration and arrangement of the same, which characterize it.
Figure number 2.- Shows a lower plan view of an embodiment of the implant according to the invention shown in the previous figure, wherein the three cutting blades of the drill that it comprises can be observed.
Figure number 3.- Shows an upper plan view of an embodiment of the implant object of the invention, wherein the configuration of the coupling pillar can be observed.

### PREFERRED EMBODIMENT OF THE INVENTION

In light of the aforementioned figures and following the numbering adopted therein, a preferred embodiment of the invention can be observed therein, which comprises the portions and elements that are described in detail below.

Thus, as can be observed in said figures, the implant (1) in question is formed by an integral metal or ceramic body which optionally comprises a coupling section (2), located in the area of the implant which remains outside the bone once the implant has been inserted into the bone, and in all cases includes a threaded section (3) in its middle area and a cutting section (4) that occupies the penetrating end of the implant.

When included, the coupling section (2) is constituted by a pillar (5) for holding the crown or artificial dental piece which is the purpose of said implant, to which end it has, by means of example, a hexagonal cross-section like the head of a bolt, as the embodiment of the figures shows, with the distinctive feature that the length of said coupling section (2) makes up 25% of the overall length L of the implant body, although it may be substituted by any other type of internal or external connection which allows a pillar or prosthetic structure to be screwed onto the rest of the implant.

The threaded section (3) has a thread (6), the worm of which forms three pronounced spires (7), and takes up approximately 15% of the total length L of the body of the implant if the upper coupling section is taken into account, and 25% with respect to the portion that penetrates the bone alone, i.e. the threaded section (3) plus the cutting section (4).

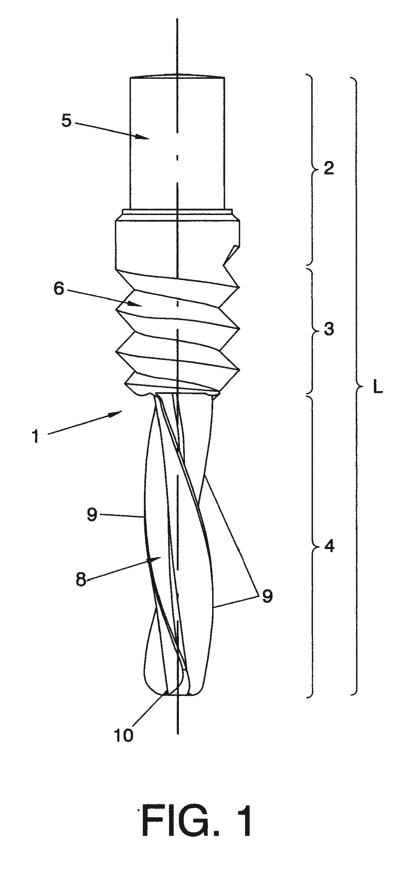

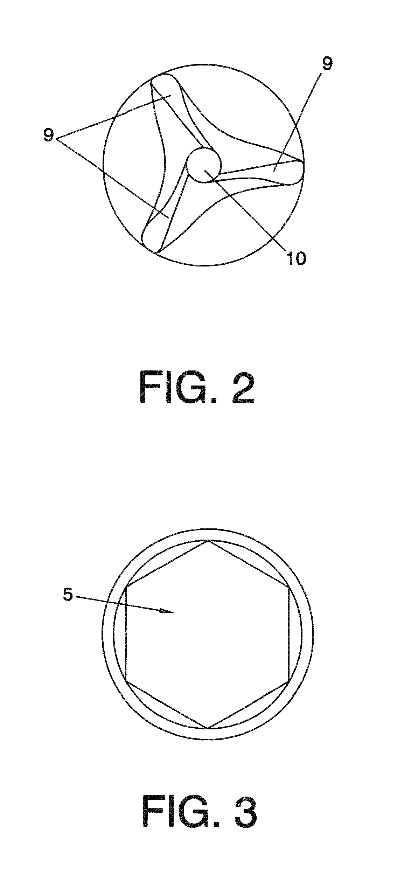

Lastly, the cutting section (4) is made up by a single helical drill (8) with three blades (9), which at the tip of said cutter (10) make up three curved cutting edges, as shown in figure 3. It is important to point out that said cutting section (4) takes up 60% of the overall length L of the piece that constitutes the implant (1) and 75% of the portion of the same that is inserted into the bone, i.e. the threaded section (3) plus the cutting section (4).

Having described the nature of the present invention in sufficient detail, as well as the way it is implemented, further explanation is deemed unnecessary in order for those skilled in the art to understand its scope and the advantages arising thereof, hereby stating that, in its essential form, it can be implemented in other embodiments that differ in detail from the one indicated by way of example, to which shall equally extend the protection sought herein, provided its basic principle is not altered, changed or modified.

## Claims

1. Self-cutting dental implant, which is of the variety that has an integral metal or ceramic body and comprises, at least a threaded section (3), with one or more threads (6), and a cutting section (4), with one or more drills (8), and optionally having a coupling section (2), located in the area of the implant which remains outside the bone once the implant has been placed, **characterized in that** the threaded section (3) includes a thread (6) that takes up approximately 25% of the portion that penetrates into the bone, i.e. the threaded section (3) plus the lower cutting section (4), and said cutting section (4) is made up by a single helical drill (8) that takes up the remaining 75 % of said portion of the implant that is inserted into the bone.

2. Self-cutting dental implant, according to claim 1, **characterized in that**, when including a coupling section (2), said coupling section is made up by a pillar (5) the length of which takes up 25% of the overall length L of the body of the implant, whereas the threaded section (3) takes up approximately 15% of the overall length L of the body of the implant, and the cutting section (4) takes up 60% of the total length (L) of the piece that constitutes the implant (1).

3. Self-cutting dental implant, according to claims 1 or 2, **characterized in that** the thread (6) of the threaded section (3) has a worm that takes the shape of three pronounced spires (7) and **in that** the helical drill (8) of the cutting section (4) has three blades (9) which at the tip of said cutter (10) form three curved cutting edges.
